(19) Europäisches Patentamt
European Patent Office
Office européen des brevets

(11) EP 3 276 732 B1

(12) **EUROPEAN PATENT SPECIFICATION**

(45) Date of publication and mention of the grant of the patent:
**08.07.2020 Bulletin 2020/28**

(21) Application number: **16768779.7**

(22) Date of filing: **22.03.2016**

(51) Int Cl.:
***H01M 10/052*** *(2010.01)* ***H01M 2/02*** *(2006.01)*
***H01M 2/16*** *(2006.01)* ***H01M 4/131*** *(2010.01)*
***H01M 4/139*** *(2010.01)* ***H01M 4/505*** *(2010.01)*
***H01M 4/525*** *(2010.01)* ***H01M 4/62*** *(2006.01)*
***H01M 10/0567*** *(2010.01)* ***H01M 10/058*** *(2010.01)*
***H01M 10/04*** *(2006.01)* *H01M 10/0525* *(2010.01)*

(86) International application number:
**PCT/JP2016/059049**

(87) International publication number:
**WO 2016/152876 (29.09.2016 Gazette 2016/39)**

(54) **LITHIUM-ION SECONDARY CELL AND METHOD FOR MANUFACTURING SAME**

LITHIUM-IONEN-SEKUNDÄRZELLE UND VERFAHREN ZUR HERSTELLUNG DAVON

PILE RECHARGEABLE AU LITHIUM-ION ET SON PROCÉDÉ DE FABRICATION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **24.03.2015 JP 2015061781**

(43) Date of publication of application:
**31.01.2018 Bulletin 2018/05**

(73) Proprietor: **NEC Corporation**
**Tokyo 108-8001 (JP)**

(72) Inventors:
- **KAWASAKI, Daisuke**
  **Tokyo 108-8001 (JP)**
- **SHIMURA, Kenichi**
  **Tokyo 108-8001 (JP)**
- **YOSHIDA, Noboru**
  **Tokyo 108-8001 (JP)**
- **INOUE, Kazuhiko**
  **Tokyo 108-8001 (JP)**
- **IRIYAMA, Jiro**
  **Tokyo 108-8001 (JP)**

(74) Representative: **Vossius & Partner**
**Patentanwälte Rechtsanwälte mbB**
**Siebertstrasse 3**
**81675 München (DE)**

(56) References cited:
**EP-A1- 2 530 114** **EP-A1- 2 816 655**
**WO-A1-2008/062895** **WO-A1-2012/115093**
**WO-A1-2014/199979** **WO-A1-2016/039387**
**JP-A- 2000 003 724** **JP-A- 2002 190 299**
**JP-A- 2007 305 574** **JP-A- 2007 317 405**
**JP-A- 2009 135 540** **JP-A- 2014 060 141**
**JP-B2- 5 151 033** **KR-B1- 100 842 142**

- **JISUK KIM ET AL: "Washing Effect of a LiNi[sub 0.83]Co[sub 0.15]Al[sub 0.02]O[sub 2] Cathode in Water", ELECTROCHEMICAL AND SOLID-STATE LETTERS, vol. 9, no. 1, 21 November 2005 (2005-11-21), page A19, XP055181246, ISSN: 1099-0062, DOI: 10.1149/1.2135427**
- **J. XIA ET AL: "Comparative Study on Methylene Methyl Disulfonate (MMDS) and 1,3-Propane Sultone (PS) as Electrolyte Additives for Li-Ion Batteries", JOURNAL OF THE ELECTROCHEMICAL SOCIETY, vol. 161, no. 4, 12 February 2014 (2014-02-12), pages A547-A553, XP055286352, ISSN: 0013-4651, DOI: 10.1149/2.049404jes**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 276 732 B1

## Description

### Technical Field

The present invention relates to a lithium ion secondary battery, particularly to a lithium ion secondary battery having low moisture content, and further relates to a method of manufacturing a lithium ion secondary battery.

### Background Art

Secondary batteries such as lithium ion secondary batteries have advantages such as high energy density, excellent long-term reliability and the like, and therefore they have been put into practical use in notebook-type personal computers and mobile phones. In recent years, since performance of electronic devices has been improved and its use in electric vehicles and the like has advanced, further improvement of battery characteristics such as safety, higher capacity, longer life, and the like, are strongly demanded.

For example, there have been made various studies on heat-resistant separators for improving the safety of lithium ion secondary batteries. For example, Patent Document 1 discloses a separator for a battery using a porous film composed of an aromatic polyamide represented by a particular formula, in which aromatic rings having para orientation occupy 90 mol% or more of all aromatic rings, the coefficient of static friction ps of 0.3 to 1.8, and Mw/Mn which is the ratio of the weight average molecular weight Mw to the number average molecular weight Mn of the aromatic polyamide is in the range of $1.3 \leq Mw/Mn \leq 4.5$. In addition, Patent Document 2 discloses that in a secondary battery using a positive electrode active material having a particular cumulative particle size distribution and capable of densely packing, by the use of a separator of laminated porous film having the laminate of a heat-resistant layer containing a heat-resistant resin and a shutdown layer containing a thermoplastic resin, the thermal breakdown of the secondary battery can be prevented.

Various studies have also been conducted on active materials, for example, multicomponent lithium transition metal oxides mainly containing nickel as a transition metal have attracted attention as a positive electrode active material that gives high capacity and high energy density.

Furthermore, various electrolyte solution additives such as 1,3-propane sultone described in Patent Document 3 have been studied in order to form a stable film on an electrode to improve battery characteristics.

Meanwhile, moisture contained in a lithium ion secondary battery reacts with a supporting salt such as $LiPF_6$ to generate HF, which deteriorates an electrolyte solution and an active material, so that it may be a cause of impairing the storage characteristics and the cycle characteristics of the lithium ion secondary battery in some cases. In addition, in a lithium ion secondary battery using an electrolyte solution additive such as a sulfonic acid ester compound, the effect of the additive may be impaired by the decomposition of the additive by the generated HF, and the desired sufficient battery characteristics may not be obtained in some cases.

In order to solve such problems, a method of removing adsorbed moisture in an active material by heat treatment, and the like have been studied, as disclosed in a method of manufacturing a negative electrode in Patent Document 4. EP 2 816 655 A1 relates to an electrode assembly including a cathode, an anode, and the separator disposed between the cathode and the anode wherein the anode includes lithium titanium oxide (LTO) as an anode active material and the separator is a non-woven separator.

### Citation List

### Patent Document

Patent Document 1: Japanese Patent No. 5151033
Patent Document 2: International Publication WO 2008/062895 pamphlet
Patent Document 3: Japanese Patent Laid-Open Publication No. 2000-3724
Patent Document 4: Japanese Patent Laid-Open Publication No. 2002-190299


### Summary of Invention

### Technical Problem

However, as described in Patent Document 4, even when moisture adsorbed by the active material itself is removed, there is still a problem that the active material, the binder, the current collector foil, the inner wall of the outer package and the like adsorb moisture during the assembly process of the lithium ion secondary battery, which increases

the moisture content in the lithium ion secondary battery. In addition, in order to remove adsorbed moisture (chemically adsorbed water) derived from starting materials of the active material, relatively high temperature condition (120 °C or higher, preferably about 120 °C to 260 °C) is necessary. In conventional manufacturing processes of a secondary battery, however, it is difficult to remove the moisture of this type sufficiently in some cases.

Accordingly, an object of the present invention is to provide a lithium ion secondary battery with a small moisture content, in which adsorbed moisture has been sufficiently removed.

## Solution to Problem

The present invention is defined by the independent claims. Dependent claims refer to preferred embodiments.

## Advantageous Effect of Invention

According to the present invention, there is provided a lithium ion secondary battery having a low moisture content.

## Brief Description of Drawing

Fig. 1 is a schematic sectional view of an electrode element included in a lithium ion secondary battery according to one embodiment of the present invention.
Fig. 2 is a cross-sectional view of one embodiment of the lithium secondary battery of the present invention.
Fig. 3 is a schematic cross-sectional view showing a structure of a stacked laminate type secondary battery according to an embodiment of the present invention.
Fig. 4 is an exploded perspective view showing a basic structure of a film package battery.
Fig. 5 is a cross-sectional view schematically showing a cross section of the battery of Fig. 4.

## Description of Embodiments

One embodiment of the present invention relates to a lithium ion secondary battery having low moisture content.

The lithium ion secondary battery according to the first embodiment of the present invention has a separator having a shrinking ratio of 2% or less by heat treatment at 90 °C for 6 hours and has an electrode element having a small moisture content. Here, the electrode element having a low moisture content means an electrode element in which a content of physically adsorbed water per electrode active material layer of the electrode element is 2% by mass or less at least at the time of injecting an electrolyte solution. The content of physically adsorbed water in the electrode element is more preferably 1% by mass or less, and further more preferably 0.5% by mass or less.

The lithium ion secondary battery according to the second embodiment of the present invention has a separator having a shrinking ratio of 2% or less by heat treatment at 90 °C for 6 hours and a positive electrode active material layer having small moisture content. Here, the positive electrode active material layer having small moisture content means that the content of chemically adsorbed water in the positive electrode active material layer is 3% by mass or less. The content of chemically adsorbed water in the positive electrode active material is more preferably 2% by mass or less, and further preferably 1% by mass or less. Further, in the present embodiment, it is further preferable that the content of the physically adsorbed water of the electrode element is within the range defined in the first embodiment.

In the present specification, the "physically adsorbed water" means moisture due to physical adsorption by adsorption and desorption of water molecules, which can be dehydrated at a relatively low temperature (about 85 °C or higher and less than 120 °C). The content of physically adsorbed water in the electrode element is obtained by cutting the active material layer of the electrode element to be measured quickly to small pieces and measuring the moisture content at 150 °C by the Karl Fischer method.

In the present specification, "chemically adsorbed water" means moisture due to chemical adsorption originated from a starting material or the like of an active material, which requires relatively high temperature (about 120 °C or higher, preferably about 120 °C to about 260 °C) for dehydration. The chemically adsorbed water ratio of the positive electrode active material layer can be measured by the following procedure.

1. The lithium ion secondary battery is disassembled under an environment having a dew point of minus 40 °C or lower, the positive electrode active material layer is taken out and cut finely and kept at 150 °C for 1 hour under a nitrogen atmosphere for preliminary drying to remove the electrolyte solution and physically adsorbed water. Then, the weight (A) (mg) of the positive electrode active material layer is measured.

2. Next, the preliminary dried positive electrode active material layer is maintained at 260 °C for 30 minutes, and the generated water content (B) (mg) is measured by the Karl Fischer coulometric titration method (JIS K 0113).
3. The percentage of chemically adsorbed water that is released by maintaining at 260 °C for 30 minutes (% by mass) is calculated by the following equation.

{Water content (B) (mg) generated from the positive electrode active material layer after preliminary drying} / {Weight (A) (mg) × 100 (% by mass) of the positive electrode active material layer after preliminary drying}

By setting the moisture content of the electrode element and/or the positive electrode active material layer within the above range, the deterioration of the battery due to moisture can be suppressed and battery characteristics such as storage characteristics and cycle characteristics can be improved.

Hereinafter, the configuration of the lithium ion secondary battery according to the present embodiment and examples of each component will be described.

<Structure of Secondary Battery>

The secondary battery according to the present embodiment can be configured such that an electrode element including a positive electrode, a negative electrode and a separator, and an electrolyte solution are contained in an outer package.

<Electrode Element>

Fig. 1 is a schematic cross-sectional view showing a structure of an electrode element included in a stacked laminate type secondary battery according to one embodiment of the present invention. In this electrode element, one or more positive electrodes c and one or more negative electrodes a are alternately stacked with the separator b sandwiched therebetween. The positive electrode current collector e of each positive electrode c is welded to each other at its end part which is not covered with the positive electrode active material layer to form an electrical connection, and the positive electrode terminal f is further welded to the welded portion. The negative electrode current collector d of each negative electrode a is welded to each other at its end part which is not covered with the negative electrode active material layer to form an electrical connection, and the negative electrode terminal g is further welded to the welded portion.

<Separator>

As a separator according to the present embodiment, it is preferable to use a separator having a small heat shrinking ratio. Specifically, it is preferable that the shrinking ratio by heat treatment at 90 °C for 6 hours is 2% or less, more preferably 1% or less, and more preferably 0.5% or less. It is also preferable that it is 0% (it does not shrink).

The heat shrinking ratio of the separator is measured by the following method. A separator is cut into strips of 1 cm width and 10 cm length, and marked at points (2 total points) 1 cm from both ends of the long side, and the distance (A) between the two points before the heat treatment is measured. Next, the separator strips are allowed to stand for 6 hours in a state where substantially no tension is applied in a thermostat oven at 90 °C, then cooled to room temperature (eg. 25 °C), and then the distance (B) between the two points is measured. The shrinking ratio of the separator is calculated by,

{A distance (A) between two points before heat treatment - a distance (B) between two points after heat treatment } / a distance (A) between two points before heat treatment × 100%

Measurement is performed for five samples in each case of the longitudinal direction and the width direction of the separator to obtain the average value. When the shrinking ratio in the longitudinal direction and the shrinking ratio in the width direction are different, the larger one is taken as the shrinking ratio in this specification.

By using a separator having a small heat shrinking ratio, the heat resistance of the lithium ion secondary battery can be enhanced. Further, by using a separator having a small shrinking ratio by a heat treatment at 90 °C for 6 hours, even when a manufacturing method including a heat-drying step at 90 °C or higher is adopted as described later, it is

possible to prevent deterioration of battery performance due to heat shrinking of the separator.

The material constituting the separator is not particularly limited as long as it satisfies the above-mentioned shrinking ratio, but the material that can be used is, for example, a heat-resistant resin component having a heat melting temperature or thermal decomposition temperature of 160 °C or higher, preferably 180 °C or higher.

Examples of such a heat-resistant resin component include polyethylene terephthalate, cellulose, aramid, polyimide, polyamide, polyphenylene sulfide resin, and the like. Among these, from the viewpoint of heat resistance, cellulose, aramid, polyimide, polyamide, and polyphenylene sulfide resin are preferable. In particular, since heat resistance is 300 °C or higher, heat shrinking is small and shape retention is good, aramid, polyimide, polyamide, polyphenylene sulfide resins are more preferable, and aramid, polyimide, and polyamide resins are further more preferable. In particular, a separator made of an aramid resin can impart excellent heat resistance to the battery, but on the other hand, it has relatively high moisture content and the deterioration of battery characteristics due to moisture may be a problem in some cases. However, with the configuration according to the present embodiment, it is possible to reduce the moisture content of the battery and to suppress deterioration of battery characteristics.

In the present specification, the "heat melting temperature" refers to the temperature measured by differential scanning calorimetry (DSC) according to JIS K 7121, and the "thermal decomposition temperature" refers to the temperature at which the weight decreases by 10% (10% weight loss temperature) when the temperature is raised from 25 °C by rate of 10 °C/min in an air flow, and "heat resistance is 300 °C or higher" means that no deformation such as softening is observed at least at 300 °C. In the present specification, the phrase "heat melting or thermal decomposition temperature is 160 °C or higher" means that either a heat melting temperature or a thermal decomposition temperature, which is lower, is 160 °C or higher. For example, in the case of a resin which decomposes without melting by heating, it means that the thermal decomposition temperature is 160 °C or higher.

Aramid is an aromatic polyamide in which one or more kinds of aromatic groups are directly linked by amide bond. The aromatic group is, for example, a phenylene group, and two aromatic rings may be bonded by oxygen, sulfur or an alkylene group (for example, a methylene group, an ethylene group, a propylene group or the like). These aromatic groups may have a substituent, and examples of the substituent include an alkyl group (for example, a methyl group, an ethyl group, a propyl group, etc.), an alkoxy group (for example, a methoxy group, an ethoxy group, propoxy group, etc.), halogen (such as chloro group) and the like. The aramid bonds may be either para type or meta type.

Examples of aramids which can be preferably used in the present embodiment include polymetaphenylene isophthalamide, polyparaphenylene terephthalamide, copolyparaphenylene 3,4'-oxydiphenylene terephthalamide, and the like, but not limited to these.

Any structure can be employed as a structure of the separator as long as it has good lithium ion permeability and mechanical strength. For example, a fiber aggregate such as a woven fabric or a nonwoven fabric, and a microporous membrane may be used. Further, it may be a combination of two or more different structures and/or components. Among these, a nonwoven fabric separator tends to cause a self-discharge failure due to a microshort circuit when metallic lithium is formed in a dendrite shape, and therefore a microporous membrane is preferable. In addition, in the case of employing a production method including a heat-drying step at 90 °C or higher described later, it is preferable not to include a polyolefin having a low melting point, and therefore preference is given to, for example, a single layer microporous film of a heat-resistant resin such as an aramid resin.

Further, in one embodiment, it may further have a layer containing an inorganic filler such as oxides or nitrides of aluminum, silicon, zirconium, titanium and the like, for example, alumina, boehmite, fine silica particles and the like.

The average pore diameter of the separator in the present embodiment is preferably 0.01 μm or more, more preferably 0.05 μm or more, and further preferably 0.1 μm or more. By having an average pore diameter of 0.1 μm or more, better lithium ion permeability can be maintained. Further, the average pore diameter is preferably 1.5 μm or less, more preferably 1 μm or less, and still more preferably 0.5 μm or less. When the average pore diameter is 1.5 μm or less, it is possible to suppress a short circuit due to precipitation of lithium. From the same viewpoint, it is preferable that the maximum pore diameter of the nonwoven fabric is 5 μm or less. The pore diameter of the nonwoven fabric can be measured by the bubble point method and the mean flow method described in SIM-F-316. Further, the average pore diameter can be taken as an average value of measured values at arbitrary five places of the separator.

Further, in the separator according to this embodiment, the porosity thereof is preferably 40% or more, more preferably 50% or more, and further preferably 60% or more. In addition, it is preferably 90% or less, and more preferably 80% or less. When the porosity is within the above range, sufficient mechanical strength and good rate property can be obtained. The porosity of the separator may be determined by measuring the bulk density according to JIS P 8118, and calculated according to the equation:

$$\text{Porosity (\%)} = [1 - (\text{bulk density } \rho \text{ (g / cm}^3\text{) / theoretical density of material } \rho_0 \text{ (g/cm}^3\text{)})] \times 100$$

As the other measurement methods, a direct observation method using an electron microscope and a mercury penetration method using a mercury porosimeter are exemplified.

Although the thickness of the separator in this embodiment is not particularly limited, it is generally preferably 8 μm or more and 30 μm or less, more preferably 9 μm or more and 27 μm or less, and still more preferably 10 μm or more and 25 μm or less. When the thickness of the separator is 10 μm or more, the safety of the secondary battery can be further enhanced. When the thickness of the separator is 25 μm or less, it is possible to maintain a favorable charge/discharge rate.

<Positive electrode>

The positive electrode according to the present embodiment comprises a positive electrode current collector and a positive electrode active material layer formed on one side or both sides of the positive electrode current collector.

(Positive electrode active material)

The positive electrode active material is not particularly limited as long as it can absorb and desorb lithium, and known positive electrode active materials can be used.

From the viewpoint of high energy density, a compound having high capacity is preferably contained. Examples of the high capacity compound include lithium nickelate ($LiNiO_2$), or lithium nickel composite oxides in which a part of the Ni of lithium nickelate is replaced by another metal element, and layered lithium nickel composite oxides represented by the following formula (A) are preferred.

$$Li_yNi_{(1-x)}M_xO_2 \qquad (A)$$

wherein $0 \leq x < 1$, $0 < y \leq 1.5$, and M is at least one element selected from the group consisting of Co, Al, Mn, Fe, Mg, Ba, Ti and B.

As one embodiment of the positive electrode active material, it is preferred that in the formula (A), $0 \leq x < 1$, $0 < y \leq 1.2$, and M is at least one element selected from the group consisting of Co, Al, Mn, Fe, Ti, and B.

From the viewpoint of high capacity, it is preferable that the Ni content is high, that is, so-called high-nickel lithium nickel composite oxides are preferably contained. Such a compound has a high capacity because it has a high Ni content, and has a longer lifetime as compared with $LiNiO_2$ because a part of Ni is substituted. As one embodiment of the high-nickel lithium nickel composite oxide, a compound represented by the following formula (1) is exemplified.

$$Li_\alpha Ni_\beta Me_\gamma O_2 \qquad (1)$$

wherein $0.9 \leq \alpha \leq 1.5$, $\beta + \gamma = 1$, $0.5 \leq \beta <1$, Me is at least one selected from the group consisting of Co, Mn, Al, Fe, Mg, Ba, Ti, and B.

In formula (1), α is more preferably $1 \leq \alpha \leq 1.2$. β is more preferably $\beta \geq 0.6$, further more preferably $\beta \geq 0.7$, and particularly preferably $\beta \geq 0.8$. Further, Me preferably comprises at least one selected from Co, Mn, Al, and Fe, and more preferably comprises at least one selected from Co, Mn and Al.

Examples of the compound represented by the formula (1) include $Li_\alpha Ni_\beta Co_\gamma Mn_\delta O_2$ ($0 < \alpha \leq 1.2$, preferably $1 \leq \alpha \leq 1.2$, $\beta + \gamma + \delta = 1$, $\beta \geq 0.7$, and $\gamma \leq 0.2$) (may be abbreviated as NCM), and $Li_\alpha Ni_\beta Co_\gamma Al_\delta O_2$ ($0 < \alpha \leq 1.5$, preferably $1 \leq \alpha \leq 1.5$, and more preferably $1 \leq \alpha \leq 1.2$, $\beta + \gamma + \delta = 1$, $\beta \geq 0.6$, preferbly $\beta \geq 0.7$, and $\gamma \leq 0.2$) (may be abbreviated as NCA)), and particularly preferably $Li_\alpha Ni_\beta Co_\gamma Mn_\delta O_2$ ($1 \leq \alpha \leq 1.2$, $\beta + \gamma + \delta = 1$, $\beta \geq 0.8$, $\gamma \leq 0.2$) or $LiNi_\beta Co_\gamma Mn_\delta O_2$ ($0.75 \leq \beta \leq 0.85$, $0.05 \leq \gamma \leq 0.15$, and $0.10 \leq \delta \leq 0.20$). More specifically, for example, $LiNi_{0.8}Mn_{0.15}Co_{0.05}O_2$, $LiNi_{0.8}Co_{0.1}Mn_{0.1}O_2$, $LiNi_{0.8}Co_{0.15}Al_{0.05}O_2$, and $LiNi_{0.8}Co_{0.1}Al_{0.1}O_2$ may be preferably used.

The above high-nickel lithium nickel composite oxide may be used alone or in combination of two or more. From the viewpoint of increasing the capacity, it is preferable that the above high-nickel lithium nickel composite oxide is contained in an amount of preferably 75% by mass or more, more preferably 85% by mass or more, still more preferably 90% by mass or more, and still more particularly preferably 95% by mass or more. Also, 100% by mass may be preferable.

From the viewpoint of thermal stability, it is also preferred that the content of Ni does not exceed 0.5, that is, x is 0.5 or more in the formula (A). It is more preferable that $1 < y \leq 1.2$ in formula (A). In addition, it is also preferred that particular transition metals do not exceed half. Examples of such compounds include $Li_\alpha Ni_\beta Co_\gamma Mn_\delta O_2$ ($0 < \alpha \leq 1.2$, preferably $1 \leq \alpha \leq 1.2$, $\beta + \gamma + \delta = 1$, $0.2 \leq \beta \leq 0.5$, $0.1 \leq \gamma \leq 0.4$, and $0.1 \leq \delta \leq 0.4$). More specific examples may include $LiNi_{0.4}Co_{0.3}Mn_{0.3}O_2$ (abbreviated as NCM433), $L1N1_{1/3}Co_{1/3}Mn_{1/3}O_2$, $LiNi_{0.5}Co_{0.2}Mn_{0.3}O_2$ (abbreviated as NCM523), and $LiNi_{0.5}Co_{0.3}Mn_{0.2}O_2$ (abbreviated as NCM532) (also including those in which the content of each transition metal fluctuates by about 10% in these compounds).

In addition, two or more compounds represented by the formula (A) may be mixed and used, and, for example,

it is also preferred that NCM532 or NCM523 and NCM433 are mixed in the range of 9:1 to 1:9 (as a typical example, 2:1) and used. Further, by mixing a material in which the content of Ni is high (β is 0.6 or more) in the formula (1) and a material in which the content of Ni does not exceed 0.5 (β is 0.5 or less, for example, NCM433), a battery having high capacity and high thermal stability can also be formed.

Examples of the positive electrode active materials other than the above include lithium manganate having a layered structure or a spinel structure such as $LiMnO_2$, $Li_xMn_2O_4$ (0<x<2), $Li_2MnO_3$, and $Li_xMn_{1.5}Ni_{0.5}O_4$ (0<x<2); $LiCoO_2$ or materials in which a part of the transition metal in this material is replaced by other metal(s); materials in which Li is excessive as compared with the stoichiometric composition in these lithium transition metal oxides; materials having olivine structure such as $LiMPO_4$, and the like. In addition, materials in which a part of elements in these metal oxides is substituted by Al, Fe, P, Ti, Si, Pb, Sn, In, Bi, Ag, Ba, Ca, Hg, Pd, Pt, Te, Zn, La are also usable.

Any of the positive electrode active materials described above may be used alone or in combination of two or more.

The median particle diameter of the positive electrode active material is preferably 0.01 to 50 μm, and further more preferably 0.02 to 40 μm. When the particle size is 0.02 μm or more, the elution of constituent elements of the positive electrode active material can be further suppressed and deterioration due to contact with the electrolyte solution can be further suppressed. In addition, when the particle size is 50 μm or less, insertion and release of lithium ions is facilitated smoothly, and electric resistance can be further reduced. The median particle diameter is a 50% cumulative diameter D50 and can be measured by a laser diffraction scattering type particle size distribution measuring apparatus.

The specific surface area of the positive electrode active material is, for example, 0.01 to 5 $m^2/g$, preferably 0.05 to 4 $m^2/g$, more preferably 0.1 to 3 $m^2/g$, and more preferably 2 to 2 $m^2/g$. When the specific surface area is within such a range, it is possible to adjust the contact area with the electrolyte solution within an appropriate range. In other words, by setting the specific surface area to 0.01 $m^2/g$ or more, absorption and desorption of lithium ions is facilitated smoothly, and the resistance can be further reduced. Further, when the specific surface area is 5 $m^2/g$ or less, it is possible to further suppress the progress of the decomposition of the electrolyte solution and the elution of constituent elements of the active material. The specific surface area can be measured by usual BET specific surface area measurement method. Further, according to one embodiment of the present invention, positive electrode active materials having a BET specific surface area of 0.5 to 2.5 $m^2/g$ can also be preferably used.

Further, the above lithium transition metal compounds may be composed of primary particles, secondary particles formed by the aggregation of primary particles, or a mixture of primary particles and secondary particles.

In general, the above lithium transition metal compounds may be prepared by mixing Li raw materials such as LiOH, $LiHCO_3$, $Li_2CO_3$, $Li_2O$, $Li_2SO_4$ and the like; Ni raw materials such as NiO, $Ni(OH)_2$, $NiSO_4$, $Ni(NO_3)$ and the like; and oxides, carbonates, hydroxides, sulfides and the like of the respective substituting elements so as to have a target metal composition ratio, and calcining the mixture in air or oxygen.

(Binder for Positive Electrode)

Examples of the positive electrode binder include, but not particularly limited to, for example, polyvinylidene fluoride, vinylidene fluoride-hexafluoropropylene copolymer, vinylidene fluoride-tetrafluoroethylene copolymer, styrene-butadiene copolymer rubber (SBR), polytetrafluoroethylene, polypropylene, polyethylene, polyimide, polyamideimide, polyacrylic acid and the like. Among them, polyvinylidene fluoride or polytetrafluoroethylene is preferable from the viewpoint of versatility and low cost, and polyvinylidene fluoride is more preferable. The amount of the positive electrode binder is preferably 2 to 10 parts by mass based on 100 parts by mass of the positive electrode active material, from the viewpoint of the binding strength and energy density that are in a trade-off relation with each other.

(Conductive Assisting Agent for Positive Electrode)

For the coating layer containing the positive electrode active material, a conductive assisting agent may be added for the purpose of lowering the impedance. Examples of the conductive assisting agent include, flake-like, soot, and fibrous carbon fine particles and the like, for example, graphite, carbon black, acetylene black, vapor grown carbon fibers and the like. The content of the conductive assisting agent for the positive electrode is preferably 1 to 5 parts by mass with respect to 100 parts by mass of the positive electrode active material.

(Positive electrode current collector)

The positive electrode current collector is not particularly limited, but for example, a current collector using aluminum, an aluminum alloy, iron-nickel-chromium-molybdenum based stainless steel can be used.

The positive electrode according to the present embodiment can be produced by a known method. For example, a slurry containing a positive electrode active material, a binder and, if necessary, a conductive assisting agent and the

like and a dispersion medium is applied on a current collector, dried to remove the dispersion medium, and then pressed to form a positive electrode. The positive electrode active material layer is formed so that the current collector has an extension portion to be connected to a positive electrode terminal. That is, the positive electrode active material layer is not coated on this extension portion.

<Negative electrode>

The negative electrode according to the present embodiment comprises a negative electrode current collector and a negative electrode active material layer formed on one side or both sides of the negative electrode current collector.

The negative electrode active material in the present embodiment is not particularly limited, and examples thereof include carbon materials capable of absorbing and desorbing lithium ions, metals capable of forming an alloy with lithium, a metal oxide capable of absorbing and desorbing lithium ions, and the like.

Examples of the carbon material include graphite (natural graphite, artificial graphite, etc.), amorphous carbon, diamond-like carbon, carbon nanotube, or composites of these. Highly crystalline graphite has high electrical conductivity and is excellent in adhesion to a negative electrode current collector made of a metal such as copper and in voltage flatness. On the other hand, amorphous carbons having a low crystallinity exhibit relatively small volume expansion, and therefore have effect of highly relaxing the volume expansion of the whole negative electrode, and hardly undergo the degradation due to nonuniformity such as crystal grain boundaries and defects.

Examples of metals include Al, Si, Pb, Sn, In, Bi, Ag, Ba, Ca, Hg, Pd, Pt, Te, Zn, La, and alloys of two or more of these. These metals or alloys may be used in combination of two or more. In addition, these metals or alloys may contain one or more nonmetallic elements.

Examples of the metal oxide include silicon oxide, aluminum oxide, tin oxide, indium oxide, zinc oxide, lithium oxide, and composites of these. It is preferable to include tin oxide or silicon oxide, and more preferably silicon oxide, as a negative electrode active material. This is because silicon oxide is relatively stable and hardly causes reaction with other compounds. It is also preferable that all or a part thereof has an amorphous structure. Further, the amorphous structure is considered to have relatively few nonuniformity-associated elements, such as crystal grain boundaries and defects. The fact that all or a part of the metal oxide has an amorphous structure can be confirmed by X-ray diffraction measurement (general XRD measurement). Specifically, when the metal oxide does not have an amorphous structure, a peak characteristic to the metal oxide is observed, but in the case where all or a part of the metal oxide has an amorphous structure, a peak characteristic to metal oxide is observed as a broad peak.

Carbon materials, metals, and metal oxides may be not only used alone, but also in combination. For example, similar materials such as graphite and amorphous carbon may be mixed with each other, or different materials such as graphite and silicon may be mixed. In one embodiment, from the viewpoint of high energy density, in addition to carbon materials such as graphite,It is also preferable to contain 0.01 to 20% by mass of metal Si and/or $SiO_x$ ($0 < x \leq 2$).

The form of the negative electrode active material is not particularly limited, but particulate ones can be used. The average particle diameter of the negative electrode active material is preferably 0.1 μm or more and 20 μm or less, more preferably 0.5 μm or more and 15 μm or less, and further preferably 1 μm or more and 10 μm or less. Here, the average particle size is 50% cumulative diameter D50 (median diameter), and it is obtained by particle size distribution measurement by laser diffraction scattering method. If the average particle diameter of the negative electrode active material is too small, the falling of powder increases, deteriorating cycle characteristics in some cases. In addition, if the average particle diameter is too large, movement of lithium ions may be inhibited in some cases.

The specific surface area of the negative electrode active material is preferably 0.2 $m^2/g$ or more, more preferably 1.0 $m^2/g$ or more, still more preferably 2.0 $m^2/g$ or more, whereas it is preferably 9.0 $m^2/g$ or less, more preferably 8.0 $m^2/g$ or less, and even more preferably 7.0 $m^2/g$ or less. The specific surface area can be measured by usual BET specific surface area measurement method. Furthermore, according to one embodiment of the present invention, negative electrode active materials having a BET specific surface area of 1 to 10 $m^2/g$ can also be preferably used.

(Binder for Negative Electrode)

Examples of the negative electrode binder include polyvinylidene fluoride, vinylidene fluoride-hexafluoropropylene copolymer, vinylidene fluoride-tetrafluoroethylene copolymer, styrene-butadiene copolymer rubber, polytetrafluoroethylene, polypropylene, polyethylene, polyimide, polyamideimide, polyacrylic acid and the like. Among them, polyvinylidene fluoride or polytetrafluoroethylene is preferable from the viewpoint of versatility and low cost, and polyvinylidene fluoride is more preferable. It is also possible to mix a styrene-butadiene copolymer rubber and carboxymethyl cellulose to prepare a binder. The amount of the negative electrode binder is preferably 1 to 20 parts by mass based on 100 parts by mass of the negative electrode active material, from the viewpoint of the binding strength and energy density being in a trade-off relation with each other.

(Conductive Assisting Agent for Negative Electrode)

For the coating layer containing the negative electrode active material, a conductive assisting agent may be added for the purpose of lowering the impedance. Examples of the conductive assisting agent include, flake-like, soot, and fibrous carbon fine particles and the like, for example, carbon black, acetylene black, vapor grown carbon fibers and the like. The content of the conductive assisting agent is preferably 0.3 to 5 parts by mass with respect to 100 parts by mass of the negative electrode active material.

(Current Collector for Negative Electrode)

As the negative electrode current collector, from the view point of electrochemical stability, aluminum, nickel, stainless steel, chromium, copper, silver, and alloys thereof are preferred. As the shape thereof, foil, flat plate, mesh and the like are exemplified. In particular, copper or an alloy of copper is preferable.

The negative electrode according to the present embodiment can be produced by a known method. For example, a slurry containing a negative electrode active material, a binder and, if necessary, a conductive assisting agent and the like and a dispersion medium is applied on a current collector so that the coating amount after drying falls within a desired range, dried to remove the dispersion medium, and then pressed to form a negative electrode. The negative electrode active material layer is formed so that the current collector has an extension portion to be connected to a negative electrode terminal. That is, the negative electrode active material layer is not coated on this extension portion.

<Electrolyte solution>

As the electrolyte solution of the secondary battery according to the present embodiment, a nonaqueous electrolyte solution containing a nonaqueous solvent and a supporting salt that is stable at the operating potential of the battery is preferable.

Examples of nonaqueous solvents include aprotic organic solvents, for examples, cyclic carbonates such as propylene carbonate (PC), ethylene carbonate (EC) and butylene carbonate (BC); open-chain carbonates such as dimethyl carbonate (DMC), diethyl carbonate (DEC), ethyl methyl carbonate (EMC) and dipropyl carbonate (DPC); aliphatic carboxylic acid esters such as propylene carbonate derivatives, methyl formate, methyl acetate and ethyl propionate; ethers such as diethyl ether and ethyl propyl ether; phosphoric acid esters such as trimethyl phosphate, triethyl phosphate, tripropyl phosphate, trioctyl phosphate and triphenyl phosphate; and fluorinated aprotic organic solvents obtainable by substituting at least a part of the hydrogen atoms of these compounds with fluorine atom(s), and the like.

Among them, cyclic or open-chain carbonate(s) such as ethylene carbonate (EC), propylene carbonate (PC), butylene carbonate (BC), dimethyl carbonate (DMC), diethyl carbonate (DEC), ethyl methyl carbonate (MEC), dipropyl carbonate (DPC) and the like is preferably contained.

Nonaqueous solvent may be used alone, or in combination of two or more.

As the supporting salt, for example, lithium salts can be used. Examples of lithium salts include $LiPF_6$, lithium imide salts, $LiAsF_6$, $LiAlCl_4$, $LiClO_4$, $LiBF_4$, $LiSbF_6$ and the like. As lithium imide salt, $LiN(C_kF_{2k+1}SO_2)(C_mF_{2m+1}SO_2)$ (wherein k and m are each independently a natural number, preferably 1 or 2) is exemplified. These may be used alone or in combination of two or more of these. From the viewpoint of cost reduction, $LiPF_6$ is preferable.

The concentration of the lithium salt in the electrolyte solution is preferably 0.7 mol/L or more and 2.0 mol/L or less. When the concentration of the lithium salt is 0.7 mol/L or more, sufficient ionic conductivity can be obtained. Also, when the concentration of the lithium salt is 2.0 mol/L or less, the viscosity can be lowered and movement of lithium ions is not disturbed.

The electrolyte solution according to the present embodiment may further contain additives. The additive is not particularly limited, and examples thereof include film forming additives, overcharge inhibitors, surfactants, and the like.

Among these, preferred additives in the present embodiment include sulfonic acid ester compounds and the like. Specific examples of the sulfonic acid ester compound include cyclic monosulfonic acid ester compounds, cyclic disulfonic acid ester compounds, open-chain sulfonic acid ester compounds, and the like.

These additives can form a film on the electrode as the secondary battery is charged and discharged, which suppresses the decomposition of the electrolyte solution and supporting salt, whereby improving the lifetime characteristics of the battery. On the other hand, these additives are easily decomposed when water content in the battery is high because hydrogen ions generated by the reaction of moisture and a supporting salt act on ester bonds, and the effect of the additive cannot be obtained in some cases. However, in the lithium ion secondary battery having a low moisture content according to the present embodiment, the decomposition of the additive due to moisture is suppressed and a film is formed more effectively, and thus the excellent effect of extending a life time can be obtained.

Examples of cyclic monosulfonic acid ester compounds include, for example, compounds represented by the

following formula (2).

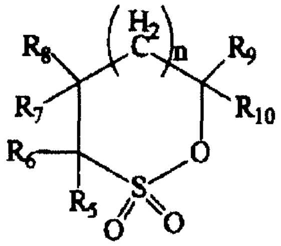

(2)

(In the formula (2), n is an integer of 0 or more and 2 or less. $R_5$ to $R_{10}$, independently one another, represent a hydrogen atom, a substituted or unsubstituted alkyl group having 1 to 12 carbon atoms, a substituted or unsubstituted fluoroalkyl group having 1 to 6 carbon atoms, a polyfluoroalkyl group having 1 to 6 carbon atoms.)

In the compound represented by the formula (2), n is preferably 0 or 1, and $R_5$ to $R_{10}$, independently one another, represent a hydrogen atom, a substituted or unsubstituted alkyl group having 1 to 12 carbon atoms, a polyfluoroalkyl group having 1 to 5 carbon atoms, and more preferably, independently one another, represent a hydrogen atom or a polyfluoroalkyl group having 1 to 5 carbon atoms. More preferably, all of $R_5$ to $R_{10}$ are hydrogen atoms, or one or two of $R_5$ to Rio is a polyfluoroalkyl group having 1 to 5 carbon atoms and the others are hydrogen atoms. The above-mentioned polyfluoroalkyl group having 1 to 5 carbon atoms is preferably a trifluoromethyl group.

Examples of cyclic monosulfonic acid ester compounds include 1,3-propane sultone, 1,2-propane sultone, 1,4-butane sultone, 1,2-butane sultone, 1,3-butane sultone, 2,4-butane sultone, 1,3-pentane sultone and the like.

Examples of cyclic disulfonic acid ester compounds include compound represented by the following formula (3).

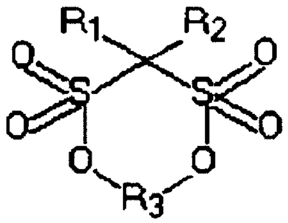

(3)

In the formula (3), $R_1$ and $R_2$ are each independently represents a substituent selected from the group consisting of a hydrogen atom, an alkyl group having 1 to 5 carbon atoms, a halogen group, and an amino group. $R_3$ represents an alkylene group having 1 to 5 carbon atoms, a carbonyl group, a sulfonyl group, a fluoroalkylene group having 1 to 6 carbon atoms, or a divalent group having 2 to 6 carbon atoms in which alkylene units or fluoroalkylene units are bonded via an ether group.

In the formula (3), $R_1$ and $R_2$ are each independently preferably a hydrogen atom, an alkyl group having 1 to 3 carbon atoms or a halogen group, and $R_3$ is more preferably an alkylene group or fluoroalkylene group having 1 or 2 carbon atoms.

Preferable examples of the cyclic disulfonic acid ester represented by the formula (3) include, but are not limited to, the following compounds.

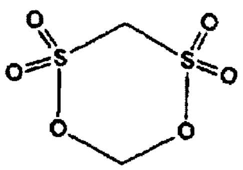

(3 − 1)

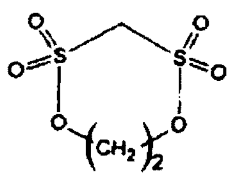

(3 − 2)

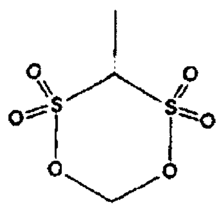

(3 − 3)

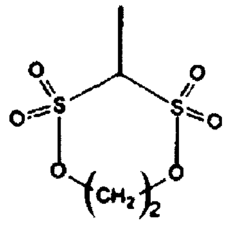

(3 − 4)

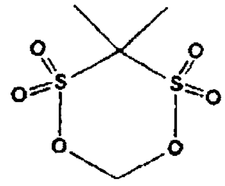

(3 − 5)

As the open-chain chain disulfonic acid ester, for example, open-chain disulfonic acid esters represented by the following formula (4) can be exemplified.

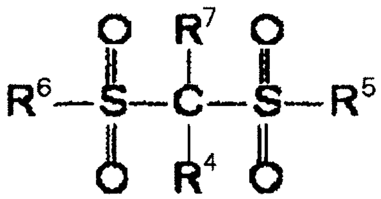

(4)

In the formula (4), $R^4$ and $R^7$, independently each other, represent an atom or a group selected from the group consisting of a hydrogen atom, an alkyl group having 1 to 5 carbon atoms, an alkoxy group having 1 to 5 carbon atoms, an fluoroalkyl group having 1 to 5 carbon atoms, an polyfluoroalkyl group having 1 to 5 carbon atoms, $-SO_2X_3$ ($X_3$ is an alkyl group having 1 to 5 carbon atoms), $-SY_1$ ($Y_1$ is an alkyl group having 1 to 5 carbon atoms), -COZ (Z is a hydrogen atom or an alkyl group having 1 to 5 carbon atoms), and a halogen atom. $R^5$ and $R^6$, independently each other, represent an alkyl group having 1 to 5 carbon atoms, an alkoxy group having 1 to 5 carbon atoms, a phenoxy group, a fluoroalkyl group having 1 to 5 carbon atoms, a polyfluoroalkyl group having 1 to 5 carbon atoms, a fluoroalkoxy group having 1 to 5 carbon atoms, a polyfluoroalkoxy group having 1 to 5 carbon atoms, a hydroxyl group, a halogen atom, $-NX_4X_5$ ($X_4$ and $X_5$ indpendently each other represent a hydrogen atom or an alkyl group having 1 to 5 carbon atoms) and $-NY_2CONY_3Y_4$ ($Y_2$ to $Y_4$, independently each other, represent a hydrogen atom or an alkyl group having 1 to 5 carbon atoms).

In the formula (4), $R^4$ and $R^7$ are, independently each other, preferably a hydrogen atom, an alkyl group having 1 or 2 carbon atoms, a fluoroalkyl group having 1 or 2 carbon atoms, or a halogen atom, and $R_5$ and $R^6$, independently each other, represent an alkyl group having 1 to 3 carbon atoms, an alkoxy group having 1 to 3 carbon atoms, a fluoroalkyl group having 1 to 3 carbon atoms, a hydroxyl group or a halogen atom.

Examples of the open-chain disulfonic acid ester compound represented by the formula (4) include, but not limited to, the following compounds.

(101) 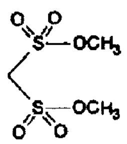

(108) 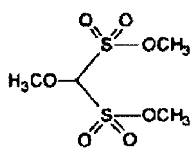

(115) 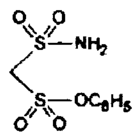

(102) 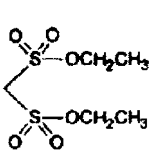

(109) 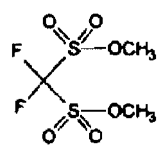

(116) 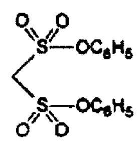

(103) 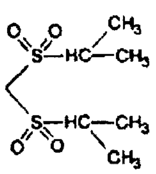

(110) 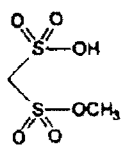

(117) 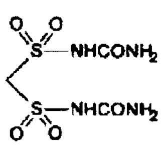

(104) 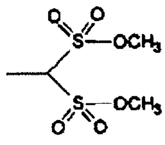 (111) 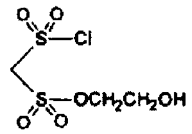 (118) 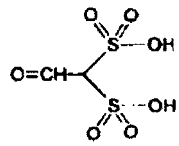

(105) 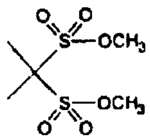 (112) 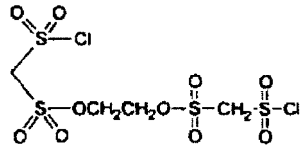 (119) 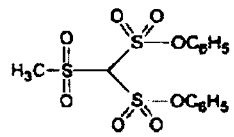

(106) 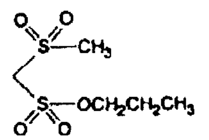 (113) 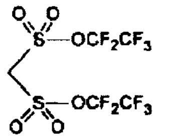 (120) 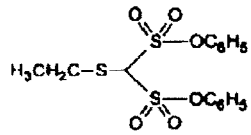

(107) 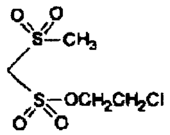 (114) 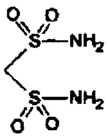

Particularly preferred compounds of the open-chain disulfonic acid ester compound represented by the formula (4) include, for example, compounds in which $R^4$ and $R^7$ are hydrogen atoms and $R^5$ and $R^6$ are methoxy groups (Compound (101)), but it is not limited thereto.

Among them, the sulfonic acid ester compound used in the present embodiment is preferably cyclic monosulfonic acid ester compounds such as 1,3-propane sultone, 1,4-butane sultone or the like, and cyclic disulfonic acid ester compounds such as methylene methane disulfonic acid ester compound (compound (3-1)).

The content of the sulfur-based additive is preferably in the range of 0.005% by mass to 10% by mass and more preferably from 0.01% by mass to 5% by mass. When it is contained in an amount of 005% by mass, or more a sufficient film effect can be obtained. When the content is 10% by mass or less, it is possible to suppress an increase in the viscosity of the electrolyte solution and an increase in resistance accompanied thereby.

The sulfur-based additives may be used alone or in combination of two or more.

<Outer package>

An outer package can be appropriately selected as long as it has stability in an electrolyte solution and sufficient steam barrier properties. For example, in the case of a stacked laminate type secondary battery, laminate films, such as polypropylene, polyethylene or the like coated with aluminium, silica or alumina can be used as the outer package. Examples of the outer package other than the film include a metal (stainless steel, aluminum etc.) case and a resin case. The outer package may be constituted by a single member or may be constituted by combining a plurality of members. In one embodiment, it is preferable to use an aluminum laminate film from the viewpoints of weight reduction, heat dissipation and easiness of processability. In another embodiment, it is preferable to use a metallic outer package from the viewpoint that a higher temperature condition can be employed in the heat-drying step in the manufacturing method according to the present invention.

<Structure of Secondary Battery>

Secondary batteries may be selected from, depending on a structure of electrode or a shape, various types such as cylindrical type, flat spirally wound prismatic type, laminated square shape type, coin type, flat wound laminated type and stacked laminate type and the like. Although the present invention can be applied to any type of secondary battery, the stacked laminate type is preferable in that it is inexpensive and has excellent flexibility in designing the cell capacity by changing the number of stacked electrodes.

Fig. 2 shows a laminate-type secondary battery as an example of a secondary battery according to this embodiment. The separator 5 is sandwiched between a positive electrode comprising a positive electrode active material layer 1 containing a positive electrode active material and a positive electrode current collector 3 and a negative electrode

comprising a negative electrode active material layer 2 and a negative electrode current collector 4. The positive electrode current collector 3 is connected to a positive electrode lead terminal 8, and the negative electrode current collector 4 is connected to a negative electrode lead terminal 7. A packaging laminate 6 is used for the outer package, and the inside of the secondary battery is filled with an electrolyte solution. It is also preferred that an electrode element (also referred to as "battery element" or "electrode stack") may have, as shown in Fig. 3, an arrangement in which a plurality of positive electrodes and a plurality of negative electrodes are stacked via separators.

Examples of the laminate resin film used for the laminate type include aluminum, aluminum alloy and titanium foil, and the like. Examples of the material of the heat bonding portion of the metal laminate resin film include thermoplastic polymer materials such as polyethylene, polypropylene, polyethylene terephthalate and the like. In addition, each of the metal laminate resin layer and the metal foil layer is not limited to one layer, and may be two or more layers.

As another embodiment, a secondary battery having a structure as shown in Fig. 4 and Fig. 5 may be provided. This secondary battery comprises a battery element 20, a film package 10 housing the battery element 20 together with an electrolyte, and a positive electrode tab 51 and a negative electrode tab 52 (hereinafter these are also simply referred to as "electrode tabs").

In the battery element 20, a plurality of positive electrodes 30 and a plurality of negative electrodes 40 are alternately stacked with separators 25 sandwiched therebetween as shown in Fig. 5. In the positive electrode 30, an electrode material 32 is applied to both surfaces of a metal foil 31, and also in the negative electrode 40, an electrode material 42 is applied to both surfaces of a metal foil 41 in the same manner. The present invention is not necessarily limited to stacking type batteries and may also be applied to batteries such as a winding type.

In the secondary battery in Fig. 2, the electrode tabs are drawn out on both sides of the package, but a secondary battery to which the present invention may be applied may have an arrangement in which the electrode tabs are drawn out on one side of the package as shown in Fig. 4. Although detailed illustration is omitted, the metal foils of the positive electrodes and the negative electrodes each have an extended portion in part of the outer periphery. The extended portions of the negative electrode metal foils are brought together into one and connected to the negative electrode tab 52, and the extended portions of the positive electrode metal foils are brought together into one and connected to the positive electrode tab 51 (see Fig. 5). The portion in which the extended portions are brought together into one in the stacking direction in this manner is also referred to as a "current collecting portion" or the like.

The film package 10 is composed of two films 10-1 and 10-2 in this example. The films 10-1 and 10-2 are heat-sealed to each other in the peripheral portion of the battery element 20 and hermetically sealed. In Fig. 4, the positive electrode tab 51 and the negative electrode tab 52 are drawn out in the same direction from one short side of the film package 10 hermetically sealed in this manner.

Of course, the electrode tabs may be drawn out from different two sides respectively. In addition, regarding the arrangement of the films, in Fig. 4 and Fig. 5, an example in which a cup portion is formed in one film 10-1 and a cup portion is not formed in the other film 10-2 is shown, but other than this, an arrangement in which cup portions are formed in both films (not illustrated), an arrangement in which a cup portion is not formed in either film (not illustrated), and the like may also be adopted.

By adopting a configuration with small water content in the electrode element and/or the positive electrode active material layer according to the present embodiment, high effect of improving battery characteristic can be obtained, particularly when "an electrode that easily adsorbs moisture" as exemplified below is used.

a: A positive electrode containing a lithium transition metal compound prepared using at least one material selected from the group consisting of LiOH, $LiHCO_3$, $Ni(OH)_2$, and $NiSO_4$ as starting materials, particularly LiOH. In particular, a positive electrode containing the lithium nickel composite compound represented by the above formula (1).
Such a positive electrode active material contains chemically adsorbed water derived from an impurity of a raw material origin, which may become a cause of increase in moisture content of the lithium ion secondary battery.

b: A positive electrode comprising NCA and/or NCM mainly containing secondary particles in which primary particles are agglomerated.
Since such positive electrode active materials are easily broken when forming a positive electrode active material layer, they re-adsorb a large amount of moisture, which may become a cause of increase in moisture content of the lithium ion secondary battery.

c: A positive electrode comprising a positive electrode active material having a specific surface area of 1.2 $m^2/g$ or more.

d: A negative electrode comprising a negative electrode active material having a specific surface area of 4 $m^2/g$ or more.

e: An electrode comprising a hydrophilic binder such a SBR, carboxymethyl cellulose, polyacrylic acid compound, and the like.

Since these materials have a high moisture adsorption rate, they re-adsorb a large amount of moisture,which

may become a cause of increase in moisture content of the lithium ion secondary battery.

As a lithium ion secondary battery according to the present embodiment, by adopting a configuration in which the moisture content of the electrode element and/or the positive electrode active material layer is small, the moisture content of the lithium ion secondary battery can be certainly reduced even when the above-described electrode which easily adsorbs moisture is used.

The lithium ion secondary battery according to the present embodiment can be produced, for example, by the following manufacturing method.

<Method of manufacturing secondary battery>

A further embodiment of the present invention relates to a method for producing a lithium ion secondary battery having a low moisture content.

An example of a method for manufacturing a lithium ion secondary battery will be described taking a stacked type lithium ion secondary battery as an example. First, in the dry air or an inert atmosphere, the positive electrode and the negative electrode are placed to oppose to each other via a separator to form an electrode element. Next, this electrode element is housed in an outer package, and then an electrolyte solution is injected to impregnate the electrode with the electrolyte solution. Then, the opening of the package is sealed to complete a secondary battery. Here, the method of manufacturing a lithium ion secondary battery according to the present embodiment is characterized in that:

(1) the shrinking ratio of the separator by heat treatment at 90 °C for 6 hours is 2% or less, and
(2) the manufacturing method comprises a step of heat-drying the electrode element at 90 °C or higher during the above manufacturing process.

The step of heat-drying the electrode element may be performed before the electrode element is accommodated in the outer package or may be performed in a state where the electrode element is accommodated in the outer package.

In the manufacturing method according to the present embodiment, by using a separator having a shrinking ratio of 2% or less by heat treatment at 90 °C for 6 hours, it is possible to perform heat-drying treatment to a semi-finished product of the lithium ion secondary battery, namely to a product of the state in which at least an electrode element has been formed. Therefore, it is possible to promptly inject the electrolyte solution after removing moisture by heat-drying. Therefore, re-adsorption of moisture during the assembly process of the secondary battery can be sufficiently suppressed. Furthermore, by using a highly heat resistant separator, it is possible to perform heat-drying of the electrode element at a higher temperature. As a result, in addition to the physically adsorbed water, the chemically adsorbed water can be removed. As a result, it is possible to manufacture a lithium ion secondary battery having a lower moisture content, in which deterioration in battery characteristics due to moisture is suppressed.

In one embodiment, from the viewpoint of water removal efficiency, it is preferable to set the temperature condition in the step of performing heat-drying to 100 °C or higher. Further, from the viewpoint of removal efficiency of chemically adsorbed water, it is preferable to perform at 120 °C or higher, and more preferably 130 °C or higher. The upper limit of the temperature condition can be selected considering the heat resistance of the constituent members of the lithium ion secondary battery to be subjected to the heat-drying step, but it is generally 220 °C or lower, and if a laminate film outer package is used, it is preferably 160 °C or lower in general. Herein, the temperature of heat-drying can be appropriately selected in consideration of the material of the outer package, the manufacturing environment (humidity condition), and the like as described later.

The time for performing the heat-drying can be appropriately determined depending on combination with the temperature condition or the like, but it is preferably, for example, 20 minutes or more, and preferably 6 hours or more. From the viewpoint of production efficiency, it is preferably 24 hours or less.

It is preferable to perform the heat-drying in an inert gas such as nitrogen. From the viewpoint of water removal efficiency, it is preferably carried out under reduced pressure of 0.1 atm or less.

Hereinafter, embodiments of the manufacturing method according to the present invention will be exemplified, but the present invention is not limited to these embodiments.

(Embodiment 1)

A method of manufacturing a lithium ion secondary battery according to the present embodiment comprises the steps of:

preparing an electrode element having a positive electrode, a negative electrode and a separator;
accommodating the produced electrode element in a laminate outer package;
heat-drying the laminate outer package and the electrode element accommodated in the laminate outer package

at 90 °C or higher and 160 °C or lower, for example 90 °C or higher and 100 °C or lower; and
then, injecting an electrolyte solution and sealing the laminated outer package.

According to Embodiment 1, since the high-temperature drying step is performed in a state where the electrode element is accommodated in the outer package, the high-temperature drying condition can be maintained until immediately before the injection of the electrolyte solution, and the adsorption of moisture after the high-temperature drying step can be suppressed.

(Embodiment 2)

A method of manufacturing a lithium ion secondary battery according to the present embodiment comprises the steps of:

preparing an electrode element having a positive electrode, a negative electrode and a separator;
heat-drying the prepared electrode element at 90 °C or higher and 160 °C or lower;
accommodating the heat-dried electrode element in an outer package; and
then, injecting an electrolyte solution and sealing the outer package.

According to the second embodiment, since the heating temperature can be set without considering the heat resistant temperature of the outer package, it is possible to perform a high temperature drying step of the electrode element, for example, at a high temperature not lower than the heat resistant temperature of the outer package, and therefore, the removal of moisture of the electrode element can be effectively performed within a short time. Therefore, it can be preferably applied to the production of a lithium ion secondary battery even using a laminate outer package having a relatively low heat resistance. In one embodiment, it is also preferable to perform the step of heat-drying at 120 °C or higher, more preferably 130 °C or higher. In the present embodiment, the process from the step of heat-drying the electrode element to the step of injecting the electrolyte solution is preferably performed in an environment of low humidity (preferably 0.6 RH% or less). This makes it possible to further suppress re-absorption of moisture in the electrode element in the step of laminate coating.

(Embodiment 3)

A method of manufacturing a lithium ion secondary battery according to the present embodiment comprises the steps of:

preparing an electrode element having a positive electrode, a negative electrode and a separator;
accommodating the produced electrode element in a metal outer package;
drying at high temperature the metal outer package and the electrode element accommodated in the metal outer package at 90 °C or higher, preferably 150 °C or higher and 220 °C or lower; and
then, injecting an electrolyte solution and sealing the metal outer package.

According to Embodiment 3, since the metal outer package is used, it is possible to perform the high-temperature drying process at a higher temperature condition, and therefore chemically adsorbed water in addition to the physically adsorbed water can be removed more effectively. In addition, from the viewpoint of removal efficiency of chemically adsorbed water, the temperature may be preferably set in some cases at 160 °C or higher, and more preferably 200 °C or higher. In addition, since the high-temperature drying step is performed in a state where the electrode element is accommodated in the outer package, the high-temperature drying condition can be maintained until immediately before the injection of the electrolyte solution, and the adsorption of moisture after the high-temperature drying step can be further suppressed.
The configuration of the lithium ion secondary battery that can be produced by the manufacturing method according to the present embodiment is not particularly limited as long as it is a secondary battery using a separator having a shrinking ratio of 2% or less by heat treatment at 90 °C for 6 hours. For example, the constituent elements detailed above in this specification can be appropriately selected and used for the lithium ion secondary battery.
Hereinafter, examples of preferred embodiments of the present invention will be described.

<Assembled Battery>

A plurality of secondary batteries according to the present embodiment may be combined to form an assembled battery. The assembled battery may be configured by connecting two or more secondary batteries according to the

present embodiment in series or in parallel or in combination of both. The connection in series and/or parallel makes it possible to adjust the capacitance and voltage freely. The number of secondary batteries included in the assembled battery can be set appropriately according to the battery capacity and output.

<Vehicle>

The secondary battery or the assembled battery according to the present embodiment can be used in vehicles. Vehicles according to an embodiment of the present invention include hybrid vehicles, fuel cell vehicles, electric vehicles (besides four-wheel vehicles (cars, trucks, commercial vehicles such as buses, light automobiles, etc.) two-wheeled vehicle (bike) and tricycle), and the like. The vehicles according to the present embodiment is not limited to automobiles, it may be a variety of power source of other vehicles, such as a moving body like a train.

<Power storage equipment>

The secondary battery or the assembled battery according to the present embodiment can be used in power storage system. The power storage systems according to the present embodiment include, for example, those which is connected between the commercial power supply and loads of household appliances and used as a backup power source or an auxiliary power in the event of power outage or the like, or those used as a large scale power storage that stabilize power output with large time variation supplied by renewable energy, for example, solar power generation.

Examples

Hereinafter, the present invention will be described in detail with reference to examples, but the present invention is not limited to these examples.

<Example 1>

(Positive electrode)

$LiNi_{0.8}Mn_{0.15}Co_{0.05}O_2$ as a positive electrode active material, PVdF as a binder and acetylene black as a conductive assisting agent were mixed at a weight ratio of 92/4/4 and kneaded using N-methylpyrrolidone as a solvent to prepare a positive electrode slurry. The prepared slurry was applied to one side of an aluminum foil current collector having a thickness of 20 μm, dried, and further pressed to obtain a positive electrode.

(Negative electrode)

Artificial graphite as a negative electrode active material, PVdF as a binder and acetylene black as a conductive assisting agent were mixed at a weight ratio of 98/5/2 and kneaded using N-methylpyrrolidone as a solvent to prepare a negative electrode slurry. The prepared slurry was applied on one side of a copper foil current collector having a thickness of 20 μm, heat treated at 80 °C in a nitrogen atmosphere, dried, and further pressed to obtain a negative electrode.

(Electrode Element)

Three prepared positive electrodes and four negative electrodes were stacked via aramid microporous membranes (shrinking ratio of 0.5% at 90 °C for 6 hours). End portions of the positive electrode current collectors on which the positive electrode active material was not formed and end portions of the negative electrode current collectors on which the negative electrode active material was not formed were respectively welded. To the respective welded portions, a positive electrode terminal formed of aluminum and a negative electrode terminal formed of nickel were further welded respectively to obtain an electrode element having a planar stacked structure.

(Electrolyte solution)

$LiPF_6$ as a supporting electrolyte was dissolved in a mixed solvent of EC / DEC (volume ratio: EC/DEC = 30/70) as nonaqueous solvent so as to have a concentration of 1 M in an electrolyte solution. Further, methylene methane disulfonic acid ester (compound (3-1)) as an additive was dissolved in the electrolyte solution so as to have a concentration of 1% by mass, to obtain an electrolyte solution.

(Preparation of Secondary Battery)

The prepared electrode element was accommodated in an aluminum laminate outer package and heat-dried in a dry nitrogen atmosphere while maintaining the temperature condition at 90 to 100 °C for 6 hours. Next, the electrolyte solution was quickly injected, and the outer package was sealed while reducing the pressure to 0.1 atm, and a lithium ion secondary battery was obtained.

(Evaluation)

1. The moisture content in the electrode element after the heat-drying step

In the lithium ion secondary battery fabricated in the same manner, the active material layer of the electrode element after the heat-drying step was quickly taken out and cut finely, and the content of physically adsorbed water was calculated by the Karl Fischer method at 150 °C.

2. Evaluation of capacity retention ratio

The prepared secondary battery was charged at 1 C up to 4.2 V and then at constant voltage for 2.5 hours in total in a thermostat kept at 25 °C, and discharged at 1 C to 2.5 V as constant current discharge. This cycle was repeated 300 times at 45 °C. The ratio of the discharge capacity after 300 cycles to the initial discharge capacity was determined as the capacity retention ratio.
The results are shown in Table 1.

(Example 2)

The electrode element produced in the same manner as in Example 1 was not accommodated in an aluminum laminate outer package, and heat-dried for 6 hours in an environment under a dry nitrogen atmosphere while maintaining the temperature condition at 90 °C. Next, the dried electrode element was quickly placed in an aluminum laminate outer package, and the electrolyte solution was injected. The outer package was sealed while reducing the pressure to 0.1 atm to manufacture a lithium ion secondary battery, which was evaluated. All steps after drying of the electrode element are carried out under humidity of 0.6 RH% or less.

<Example 3>

A lithium ion secondary battery was prepared and evaluated in the same manner as in Example 1 except that a metal can was used in place of the aluminum laminate outer package and heat drying was performed at 150 °C.

(Reference Example 1)

A lithium ion secondary battery was obtained and evaluated in the same manner as in Example 1 except that heat drying at 90 to 100 °C was not carried out.

(Reference Example 2)

A lithium ion secondary battery was prepared and evaluated in the same manner as in Example 1 except that a polypropylene microporous membrane (heat shrinking ratio of 2% by heat treatment at 90 °C for 60 hours) was used as a separator in place of the aramid microporous membrane. Since the initial charge/discharge capacity of the battery of Reference Example 2 was 100 mAh or less, no subsequent evaluation was made.

(Evaluation)

3. Measurement of chemically adsorbed water content

The lithium ion secondary batteries of Example 3 and Reference Example 1, each after 300 cycles, were disassembled under an environment having a dew point of minus 40 °C or lower, and the positive electrode active material layers were recovered. the positive electrode active materials were preliminarily dried by keeping under nitrogen atmosphere at 150 °C for 1 hour, and weighed and then kept at 260 °C for 30 minutes to allow to generation water. The chemically adsorbed water ratio was determined by the Karl Fischer coulometric titration method by measuring the

amount of the generated water.

The results are shown in Table 1.

[Table 1]

| | Separator | Outer package | Physically adsorbed water (wt%) | Chemically adsorbed water (wt%) | Capacity retention ratio (%) |
|---|---|---|---|---|---|
| Example 1 | aramid microporous membrane | aluminum laminate | 1 | nd. | 72 |
| Example 2 | aramid microporous membrane | aluminum laminate | 1 | nd. | 74 |
| Example 3 | aramid microporous membrane | metal can | 0.5 | 1 | 74 |
| Ref. Example 1 | aramid microporous membrane | aluminum laminate | 2 | 4 | 55 |

Industrial Applicability

The battery according to the present invention can be utilized in, for example, all the industrial fields requiring a power supply and the industrial fields pertaining to the transportation, storage and supply of electric energy. Specifically, it can be used in, for example, power supplies for mobile equipment such as cellular phones and notebook personal computers; power supplies for moving/transporting media such as trains, satellites and submarines including electrically driven vehicles such as an electric vehicle, a hybrid vehicle, an electric motorbike, and an electric-assisted bike; backup power supplies for UPSs; and electricity storage facilities for storing electric power generated by photovoltaic power generation, wind power generation and the like.

Explanation of Reference

a negative electrode
b separator
c positive electrode
d negative electrode current collector
e positive electrode current collector
f positive electrode terminal
g negative electrode terminal
1 positive electrode active material layer
2 negative electrode active material layer
3 positive electrode current collector
4 negative electrode current collector
5 separator
6 laminate package
7 negative electrode lead terminal
8 positive electrode lead terminal
10 film package
20 battery element
25 separator
30 positive electrode
40 negative electrode

## Claims

1. A lithium ion secondary battery comprising an electrode element comprising a positive electrode, a negative electrode and a separator, and an electrolyte solution, wherein
the separator has a shrinking ratio as determined by the method defined in the description of 2% or less by heat treatment at 90 °C for 6 hours and is an aramid microporous membrane, and
a content of physically adsorbed water of the electrode element is 2% by mass or less as determined by the method defined in the description, and a content of chemically adsorbed water in a positive electrode active material layer of the positive electrode is 1% by mass or less as determined by the method defined in the description, and the positive electrode comprises a lithium nickel composite compound represented by following formula (1):

$$Ei_{\alpha}Ni_{\beta}Me_{\gamma}O_2 \qquad (1)$$

wherein $0.9 \leq \alpha \leq 1.5$, $\beta + \gamma = 1$, $0.6 \leq \beta < 1$, Me is at least one selected from the group consisting of Co, Mn, Al, Fe, Mg, Ba, Ti, and B.

2. The lithium ion secondary battery according to claim 1, wherein the electrode element comprises one or more selected from the group consisting of:

a lithium transition metal compound produced using starting materials comprising LiOH,
a lithium nickel composite compound in a form of secondary particles in which primary particles are agglomerated,
a positive electrode active material having a specific surface area of 1.5 $m^2/g$ or more as determined by the method defined in the description,
a negative electrode active material having a specific surface area of 4 $m^2/g$ or more as determined by the method defined in the description, and
a hydrophilic binder.

3. The lithium ion secondary battery according to claim 1 or 2, comprising a lithium nickel composite compound represented by formula:

$$Li_{\alpha}Ni_{\beta}Co_{\gamma}Mn_{\delta}O_2$$

wherein $1 \leq \alpha \leq 1.2$, $\beta + \gamma + \delta = 1$, $\beta \geq 0.7$, and $\gamma \leq 0.2$, or formula:

$$Li_{\alpha}Ni_{\beta}Co_{\gamma}Al_{\delta}O_2$$

wherein $1 \leq \alpha \leq 1.5$, $\beta + \gamma + \delta = 1$, $\beta \geq 0.7$, and $\gamma \leq 0.2$.

4. The lithium ion secondary battery according to any one of claims 1 to 3, wherein the electrolyte solution comprises a sulfonic acid ester compound.

5. The lithium ion secondary battery according to any one of claims 1 to 4, comprising a laminate outer package.

6. A method of manufacturing a lithium ion secondary battery comprising an electrode element comprising a positive electrode, a negative electrode and a separator, an electrolyte solution and an outer package, wherein
the separator has a shrinking ratio as determined by the method defined in the description of 2% or less by heat treatment at 90 °C for 6 hours and is an aramid microporous membrane,
a content of physically adsorbed water of the electrode element is 2% by mass or less as determined by the method defined in the description, and a content of chemically adsorbed water in a positive electrode active material layer of the positive electrode is 1% by mass or less as determined by the method defined in the description, the positive electrode comprises a lithium nickel composite oxide represented by formula (1):

$$Li_{\alpha}Ni_{\beta}Me_{\gamma}O_2 \qquad (1)$$

wherein $0.9 \leq \alpha \leq 1.5$, $\beta + \gamma = 1$, $0.6 \leq \beta < 1$, Me is at least one selected from the group consisting of Co, Mn, Al, Fe, Mg, Ba, Ti, and B, and
the method comprises a step of heat-drying the electrode element at 90 °C or higher for 20 minutes or more and 24 hours or less in an inert gas before injecting the electrolyte solution.

7. The method of manufacturing a lithium ion secondary battery according to claim 6, wherein the step of heat-drying the electrode element is performed at 150 °C or higher for 20 minutes or more and 24 hours or less in an inert gas.

## Patentansprüche

1. Lithiumionen-Sekundärbatterie, die ein Elektrodenelement mit einer positiven Elektrode, einer negativen Elektrode und einem Separator, und eine Elektrolytlösung aufweist, wobei
der Separator ein Schrumpfungsverhältnis, wie durch das in der Beschreibung definierte Verfahren bestimmt, von 2 % oder weniger bei 6-stündiger Wärmebehandlung bei 90 °C aufweist, und eine mikroporöse Aramidmembran ist, und
ein Gehalt an physikalisch adsorbiertem Wasser des Elektrodenelements, wie durch das in der Beschreibung definierte Verfahren bestimmt, 2 Massen-% oder weniger beträgt und
ein Gehalt an chemisch adsorbiertem Wasser in einer aktiven Materialschicht der positiven Elektrode, wie durch das in der Beschreibung definierte Verfahren bestimmt, 1 Massenprozent oder weniger beträgt und
die positive Elektrode eine Lithium-Nickel-Kompositverbindung aufweist, die durch die folgende Formel (1) dargestellt wird:

$$Li_{\alpha}Ni_{\beta}Me_{\gamma}O_2 \qquad (1),$$

wobei $0,9 \leq \alpha \leq 1,5$, $\beta + \gamma = 1$, $0,6 \leq \beta < 1$ ist, Me mindestens eines ausgewählt aus der Gruppe bestehend aus Co, Mn, Al, Fe, Mg, Ba, Ti und B ist.

2. Lithium-Ionen-Sekundärbatterie nach Anspruch 1, wobei das Elektrodenelement eines oder mehrere ist aus der Gruppe bestehend aus
einer Lithium-Übergangsmetallverbindung, hergestellt unter Verwendung von Ausgangsmaterialien, die LiOH aufweisen,
einer Lithium-Nickel-Kompositverbindung in einer Form von Sekundärteilchen, bei denen Primärteilchen agglomeriert sind,
einem positiven Elektrodenaktivmaterial mit einer spezifischen Oberfläche, wie durch das in der Beschreibung definierte Verfahren bestimmt, von 1,5 $m^2$/g oder mehr,
einem negativen Elektrodenaktivmaterial mit einer spezifischen Oberfläche, wie durch das in der Beschreibung definierte Verfahren
einem hydrophilen Bindemittel.

3. Lithium-Ionen-Sekundärbatterie nach Anspruch 1 oder 2, die eine Lithium-Nickel-Kompositverbindung aufweist, die dargestellt wird durch die Formel:

$$Li_{\alpha}Ni_{\beta}Co_{\gamma}Mn_{\delta}O_2,$$

wobei $1 \leq \alpha \leq 1,2$, $\beta + \gamma + \delta = 1$, $\beta \geq 0,7$, und $\gamma \leq 0,2$ ist,
oder durch die Formel:

$$Li_{\alpha}Ni_{\beta}Co_{\gamma}Al_{\delta}O_2,$$

wobei $1 \leq \alpha \leq 1,5$, $\beta + \gamma + \delta = 1$, $\beta \geq 0,7$, und $\gamma \leq 0,2$ ist.

4. Lithium-Ionen-Sekundärbatterie nach einem der Ansprüche 1 bis 3, wobei die Elektrolytlösung eine Sulfonsäureesterverbindung aufweist.

5. Lithium-Ionen-Sekundärbatterie nach einem der Ansprüche 1 bis 4 mit einer äußeren Umhüllung aus Laminat.

6. Verfahren zur Herstellung einer Lithiumionen-Sekundärbatterie, die ein Elektrodenelement mit einer positiven Elektrode, einer negativen Elektrode und einem Separator, eine Elektrolytlösung und eine äußere Umhüllung aufweist, wobei
der Separator ein Schrumpfungsverhältnis, wie durch das in der Beschreibung definierte Verfahren bestimmt, von 2 % oder weniger bei 6-stündiger Wärmebehandlung bei 90 °C aufweist, und eine mikroporöse Aramidmembran ist,
ein Gehalt an physikalisch adsorbiertem Wasser des Elektrodenelements, wie durch das in der Beschreibung definierte Verfahren bestimmt, 2 Massen-% oder weniger beträgt und
ein Gehalt an chemisch adsorbiertem Wasser in einer aktiven Materialschicht der positiven Elektrode, wie durch das in der Beschreibung definierte Verfahren bestimmt, 1 Massenprozent oder weniger beträgt,
die positive Elektrode ein Lithium-Nickel-Verbundoxid aufweist, das dargestellt wird durch die Formel (1):

$$Li_{\alpha}Ni_{\beta}Me_{\gamma}O_2 \quad (1),$$

wobei $0{,}9 \leq \alpha \leq 1{,}5$, $\beta + \gamma = 1$, $0{,}6 \leq \beta < 1$ ist, Me mindestens eines ausgewählt aus der Gruppe bestehend aus Co, Mn, Al, Fe, Mg, Ba, Ti und B ist, und
das Verfahren einen Schritt des Wärmetrocknens des Elektrodenelements bei 90 °C oder höher für 20 Minuten oder mehr und 24 Stunden oder weniger in einem Inertgas vor dem Einspritzen der Elektrolytlösung aufweist.

**7.** Verfahren zur Herstellung einer Lithium-Ionen-Sekundärbatterie nach Anspruch 6, wobei der Schritt des Wärmetrocknens des Elektrodenelements bei 150 °C oder höher für 20 Minuten oder mehr und 24 Stunden oder weniger in einem Inertgas durchgeführt wird.

## Revendications

**1.** Batterie secondaire lithium-ion comprenant un élément d'électrode comprenant une électrode positive, une électrode négative et un séparateur, et une solution électrolytique, dans laquelle
le séparateur a un rapport de retrait tel que déterminé par le procédé défini dans la description de 2 % ou moins par traitement thermique à 90 °C pendant 6 heures et est une membrane microporeuse d'aramide, et
une teneur en eau physiquement adsorbée de l'élément d'électrode est de 2 % en masse ou moins telle que déterminée par le procédé défini dans la description, et
une teneur en eau chimiquement adsorbée dans une couche de matière active d'électrode positive de l'électrode positive est de 1 % en masse ou moins, telle que déterminée par le procédé défini dans la description, et
l'électrode positive comprend un composé composite de lithium-nickel représenté par la formule (1) suivante :

$$Li_{\alpha}Ni_{\beta}Me_{\gamma}O_2 \quad (1)$$

dans laquelle $0{,}9 \leq \alpha \leq 1{,}5$, $\beta + \gamma = 1$, $0{,}6 \leq \beta < 1$, Me est au moins un élément choisi dans le groupe constitué de Co, Mn, Al, Fe, Mg, Ba, Ti, et B.

**2.** Batterie secondaire lithium-ion selon la revendication 1, dans laquelle l'élément d'électrode comprend un ou plusieurs éléments choisis dans le groupe constitué de :

un composé de métal de transition de lithium produit à l'aide de matières de départ comprenant LiOH,
un composé composite de lithium-nickel sous forme de particules secondaires dans lesquelles des particules primaires sont agglomérées,
une matière active d'électrode positive ayant une aire spécifique de 1,5 $m^2/g$ ou plus telle que déterminée par le procédé défini dans la description,
une matière active d'électrode négative ayant une aire spécifique de 4 $m^2/g$ ou plus telle que déterminée par le procédé défini dans la description, et
un liant hydrophile.

**3.** Batterie secondaire lithium-ion selon la revendication 1 ou 2, comprenant un composé composite de lithium-nickel représenté par la formule :

$$Li_{\alpha}Ni_{\beta}Co_{\gamma}Mn_{\delta}O_2$$

dans laquelle $1 \leq \alpha \leq 1{,}2$, $\beta + \gamma + \delta = 1$, $\beta \geq 0{,}7$, et $\gamma \leq 0{,}2$,
ou la formule :

$$Li_{\alpha}Ni_{\beta}Co_{\gamma}Al_{\delta}O_2$$

dans laquelle $1 \leq \alpha \leq 1{,}5$, $\beta + \gamma + \delta = 1$, $\beta \geq 0{,}7$, et $\gamma \leq 0{,}2$.

**4.** Batterie secondaire lithium-ion selon l'une quelconque des revendications 1 à 3, dans laquelle la solution électrolytique comprend un composé d'ester d'acide sulfonique.

**5.** Batterie secondaire lithium-ion selon l'une quelconque des revendications 1 à 4, comprenant un boîtier extérieur stratifié.

**6.** Procédé de fabrication d'une batterie secondaire lithium-ion comprenant un élément d'électrode comprenant une électrode positive, une électrode négative et un séparateur, une solution électrolytique et un boîtier extérieur, dans lequel
le séparateur a un rapport de retrait tel que déterminé par le procédé défini dans la description de 2% ou moins par traitement thermique à 90 °C pendant 6 heures et est une membrane microporeuse d'aramide,
une teneur en eau physiquement adsorbée de l'élément d'électrode est de 2 % en masse ou moins telle que déterminée par le procédé défini dans la description, et
une teneur en eau chimiquement adsorbée dans une couche de matière active d'électrode positive de l'électrode positive est de 1 % en masse ou moins, telle que déterminée par le procédé défini dans la description,
l'électrode positive comprend un oxyde composite de lithium-nickel représenté par la formule (1) :

$$Li_{\alpha}Ni_{\beta}Me_{\gamma}O_2 \qquad (1)$$

dans laquelle $0,9 \leq a \leq 1,5$, $\beta + \gamma = 1$, $0,6 \leq \beta < 1$, Me est au moins un élément choisi dans le groupe constitué de Co, Mn, Al, Fe, Mg, Ba, Ti, et B, et
le procédé comprend une étape de séchage thermique de l'élément d'électrode à 90 °C ou plus pendant 20 minutes ou plus et 24 heures ou moins dans un gaz inerte avant injection de la solution électrolytique.

**7.** Procédé de fabrication d'une batterie secondaire lithium-ion selon la revendication 6, dans lequel l'étape de séchage thermique de l'élément d'électrode est réalisée à 150 °C ou plus pendant 20 minutes ou plus et 24 heures ou moins dans un gaz inerte.

Fig. 1

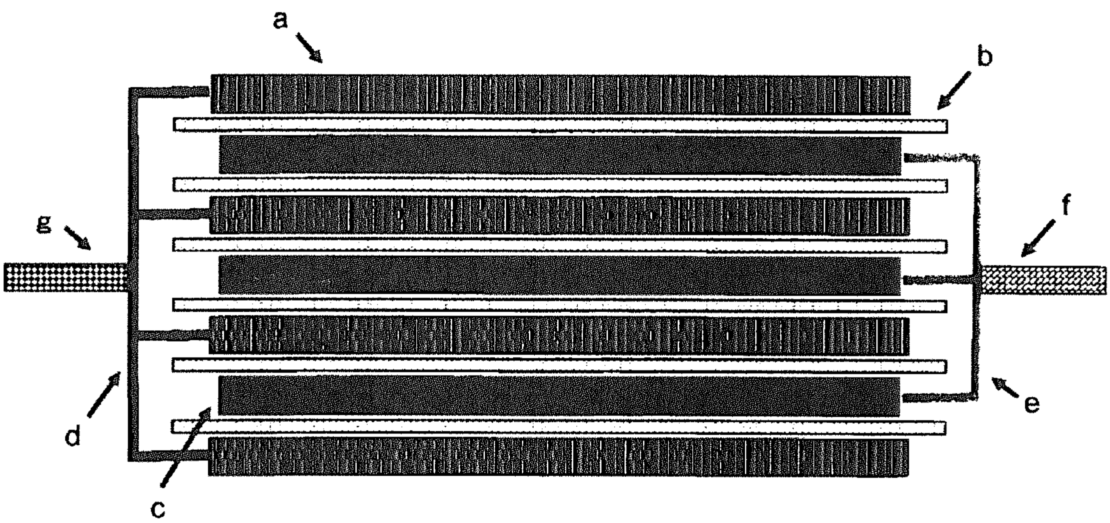


Fig. 2

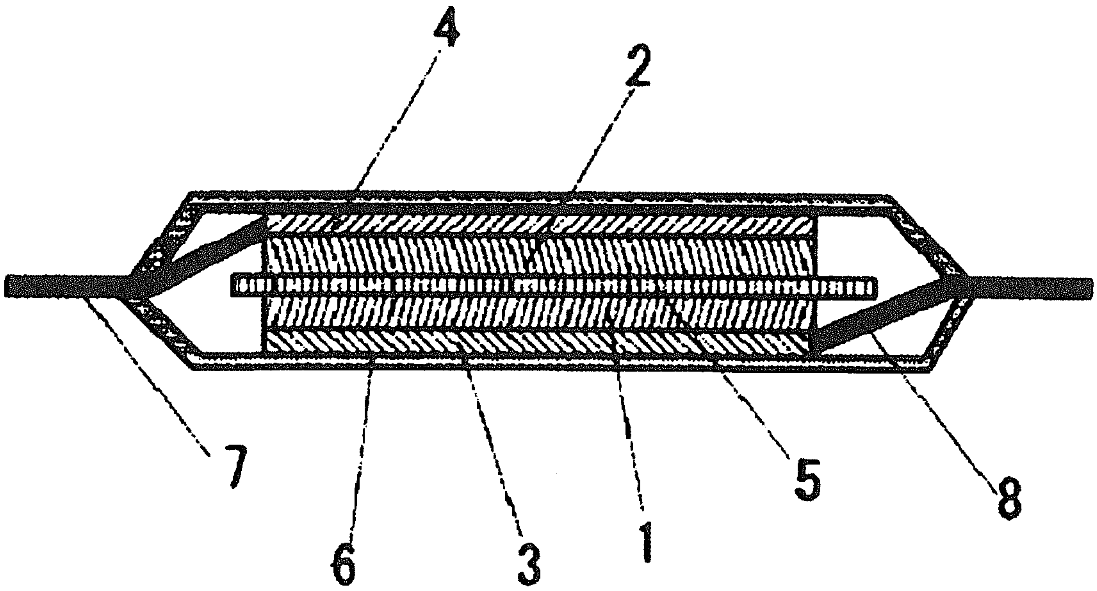

Fig. 3

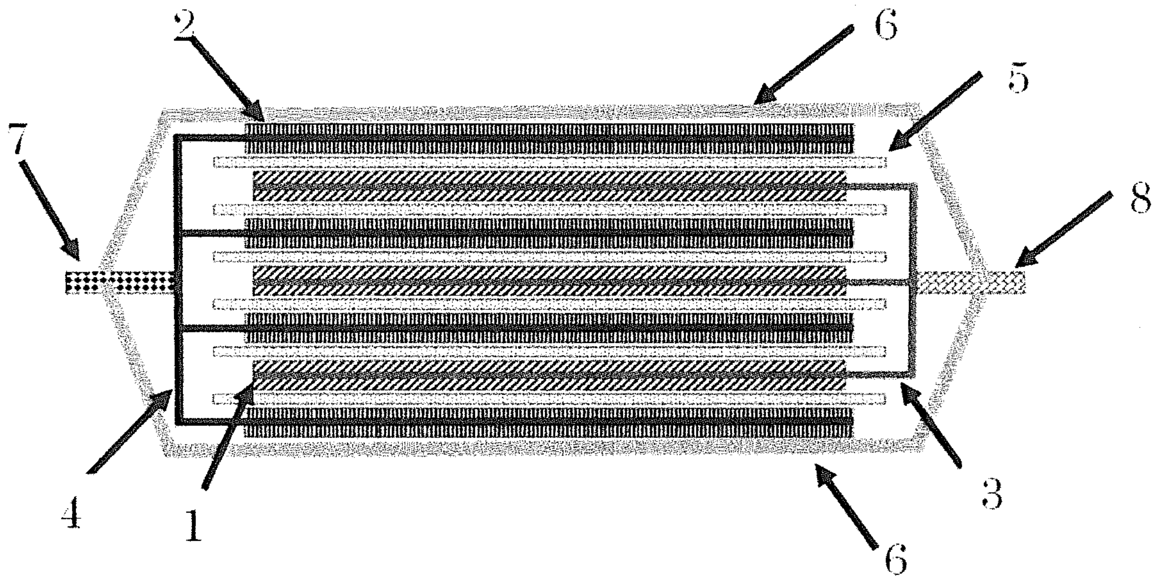


Fig. 4

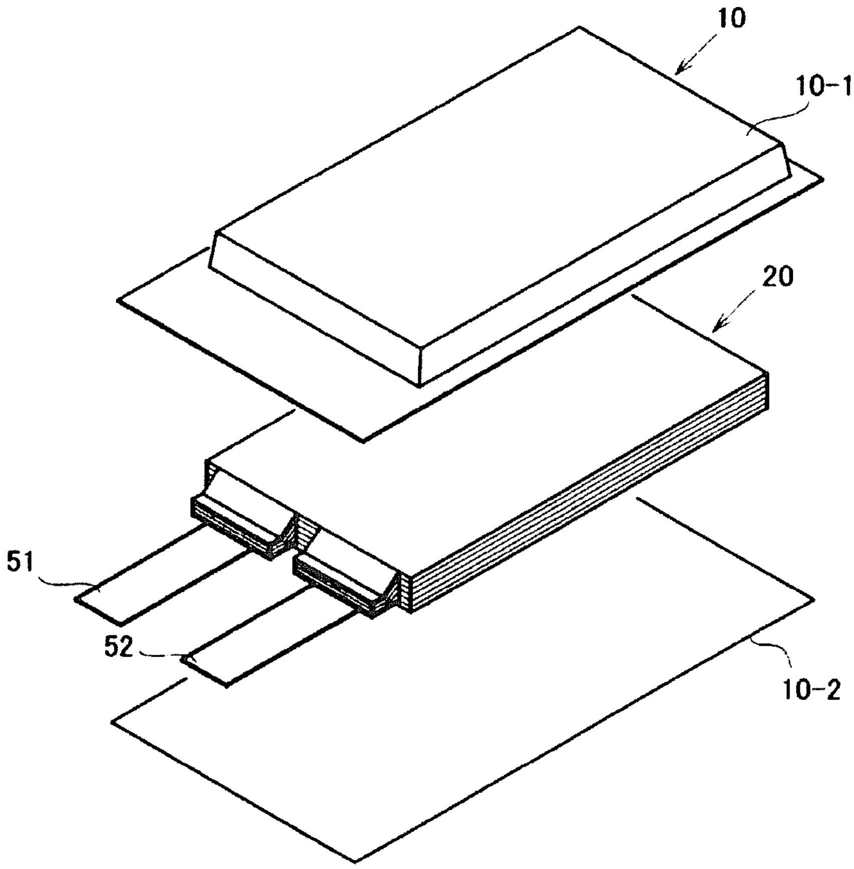

Fig. 5

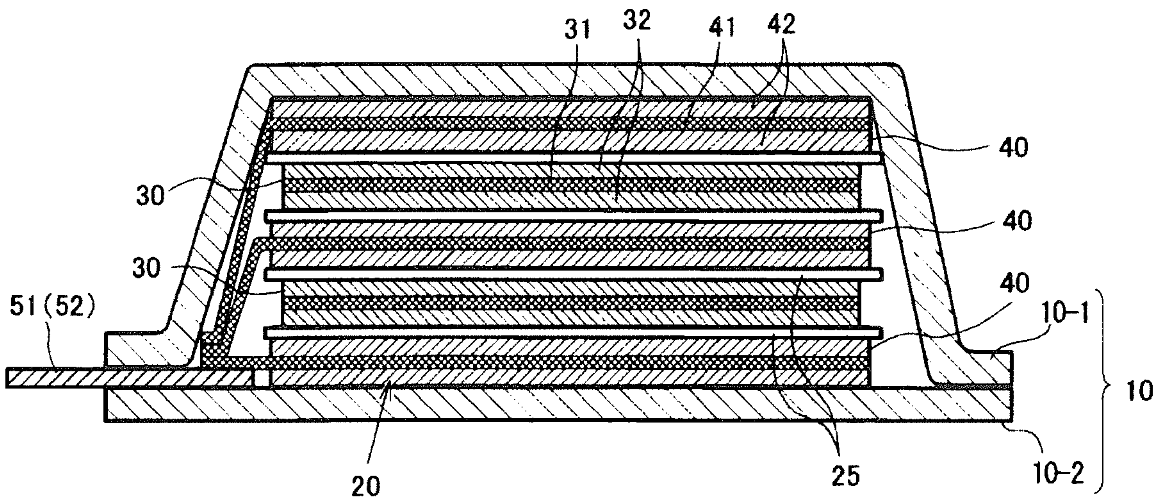

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- EP 2816655 A1
- JP 5151033 B
- WO 2008062895 A
- JP 2000003724 A
- JP 2002190299 A